# EUROPÄISCHE PATENTANMELDUNG

(11) **EP 4 084 246 A1**
(43) Veröffentlichungstag der Anmeldung: **02.11.2022**
(21) Anmeldenummer: 21170393.9
(22) Anmeldetag: 26.04.2021
(51) Int. Cl.: H02G 1/12, H01R 43/05

(54) **KABELBEARBEITUNGSVORRICHTUNG**

(71) Anmelder: Schäfer Werkzeug- und Sondermaschinenbau GmbH, 76669 Bad Schönborn (DE)
(72) Erfinder: Wagner, Michael, 76669 Bad Schönborn (DE); Wuhrer, Alexander, 76669 Bad Schönborn (DE); Schäfer, Alexander, 76669 Bad Schönborn (DE)
(74) Vertreter: Hoffmann Eitle

(57) **Zusammenfassung**

Es wird eine Kabelbearbeitungsvorrichtung bereitgestellt, die aufweist: eine Abisoliervorrichtung zum Abisolieren eines Abschnitts einer Isolierung eines Kabels, und eine Kabelaufbereitungseinrichtung, die eingerichtet ist, durch Drücken der Isolierung das Kabel für ein Abisolieren aufzubereiten.

## Beschreibung

### Technisches Gebiet

Die Erfindung betrifft eine Kabelbearbeitungsvorrichtung zur Verarbeitung eines Kabels. Ferner betrifft die Erfindung ein Verfahren.

### Stand der Technik

Im Stand der Technik sind Abisoliervorrichtungen bekannt, die mit Messern ausgestattet sind, um eine Isolierung an einem Endabschnitt eines Kabels einzuschneiden und diesen Abschnitt der Isolierung vom Kabel zu lösen. Dabei ist es ein Ziel, die Messer der Abisoliervorrichtung derart tief in die Isolierung einzubringen, dass die im Kabel befindlichen Litzen möglichst unbeschädigt verbleiben. Dringt ein Messer der Abisoliervorrichtung zu tief in die Isolierung ein, so besteht insbesondere die Gefahr, dass Litzen des Kabels durchtrennt werden. Schneiden die Messer hingegen nicht ausreichend tief in die Isolierung ein, so wird die Isolierung nicht ordnungsgemäß von den Litzen abgezogen und würde somit am Kabel verbleiben. Demnach wäre das Aufbringen eines Kontaktelements nicht möglich.

Um eine Einschneidtiefe der Messer der Abisoliervorrichtung zu überwachen, bestehen verschiedene Möglichkeiten. Beispielsweise wird in der WO 2013/072229 A1 eine Abisoliervorrichtung zum Abisolieren einer Isolierung eines Kabels mit einer ersten Messerhälfte und einer zweiten Messerhälfte beschrieben, wobei die Messehälften in einer ersten Richtung aufeinander zu bewegbar sind. Die zueinander weisenden Seitenflächen der ersten und zweiten Messerhälfte sind in einer zur ersten Richtung im Wesentlichen senkrechten zweiten Richtung mit einem Abstand voneinander beabstandet, und an der ersten Messerhälfte und der zweiten Messerhälfte ist eine Spannung angelegt. Die Abisoliervorrichtung weist ferner eine mit der ersten Messerhälfte und der zweiten Messerhälfte verbundene Auswerteeinheit auf, die einen Stromfluss durch die erste Messerhälfte und die zweite Messerhälfte erfassen kann.

Ferner gibt es Entwicklungen (siehe EP 3 713 023 A1), eine Abisoliermessereinrichtung und eine Nullschnittmessereinrichtung zu kombinieren, wobei zu Beginn des Abisoliervorgangs ein Kontakt zwischen der Nullschnittmessereinrichtung und den Litzen des Kabels hergestellt wird. Anschließend kann die Abisoliermessereinrichtung in die Isolierung einschneiden, wobei ein Kontakt zur Kabellitze vermieden wird. Eine ungewollte Kontaktierung der Abisoliermessereinrichtung mit den Kabellitzen kann detektiert werden.

Obwohl sich die genannten Vorrichtungen bewährt haben, bestehen weiter Anforderungen, Ausschuss beim Abisolieren weiter zu reduzieren, dabei jedoch eine qualitativ hochwertige Verarbeitung sicherzustellen.

### Gegenstand der Erfindung

Ziel der Erfindung ist es, eine Kabelbearbeitungsvorrichtung bereitzustellen, mit der eine Kabelverarbeitung bei hohem Qualitätsniveau sichergestellt werden kann.

Der Gegenstand des Anspruchs 1 stellt eine entsprechende Kabelbearbeitungsvorrichtung bereit. Weitere bevorzugte Ausführungsformen sind in den abhängigen Ansprüchen und nachfolgend aufgeführt. Ferner betrifft die Erfindung ein Verfahren. Im Rahmen des Verfahrens kann eine Kabelbearbeitungsvorrichtung gemäß einem der abhängigen Ansprüche oder der nachfolgend erläuterten Aspekte zum Einsatz kommen.

Die Kabelbearbeitungsvorrichtung weist eine Abisoliervorrichtung zum Abisolieren eines Abschnitts einer Isolierung eines Kabels sowie eine Kabelaufbereitungseinrichtung auf, wobei die Kabelaufbereitungseinrichtung eingerichtet ist, durch Drücken, insbesondere Kneten oder Walzen der Isolierung das Kabel für ein Abisolieren aufzubereiten.

Ein Drücken kann ein durch Aufbringen eines Drucks in einer Richtung erfolgen, oder das Drücken kann durch eine alternierende, translatorische Bewegung erfolgen. Ferner kann das Drücken durch ein Walzen des Kabels unter Druckbeaufschlagung erfolgen. Die genannten Ausführungsformen können auch in Kombination eingesetzt werden.

Die Kabelbearbeitungsvorrichtung hat den Vorteil, dass in dem Bereich des Kabels, in dem die Isolierung abisoliert werden soll, durch Drücken der Isolierung bereits ein Lösen der Isolierung von den Litzen eintritt. Es hat sich gezeigt, dass damit unter anderem ein Anhaften der Isolierung an den Litzen vermieden oder stark reduziert werden kann. Auf diese Weise wird auch das Abisolieren der Isolierung mit der Abisoliervorrichtung deutlich erleichtert und insbesondere vermieden, dass die eingeschnittene Isolierung beim Abstreifen weiter an den Litzen haftet. Im Zuge dessen kann der Ausschuss weiter reduziert und eine qualitativ hochwertige Verarbeitung sichergestellt werden. Auch können Stillstandzeiten der Kabelbearbeitungsvorrichtung vermieden werden. Darüber hinaus hat sich gezeigt, dass sich durch das Drücken auf das Kabel Spannungen in den Litzen lösen lassen.

Insbesondere kann der Drall der Litzen verringert werden, sodass ein leichteres Abziehen der Isolation beim Abisolieren erreicht wird.

Besonders vorteilhaft ist die genannte Kabelbearbeitungsvorrichtung sowie das nachfolgend genannte Verfahren bei der Verarbeitung von Kabeln, die eine Silikonkautschuk-Isolierung aufweisen. Durch das Drücken der Isolierung kann ein bei der Kabelherstellung zwischen die Litzen "geflossenes" Kabelisolationsmaterial, dass gewisse Verklebung der Isolierung mit Litzen hervorruft, gelöst werden.

Gemäß einer Ausführungsform weist die Kabelaufbereitungseinrichtung Andrückelemente auf, wobei zumindest eines der Andrückelemente bewegbar ist. Das Kabel kann bei der Aufbereitung mit der Kabelaufbereitungseinrichtung zwischen die Andrückelemente geführt werden, wobei eine Anfahrbewegung des zumindest einen Andrückelements einen Druck in radialer Richtung auf die Isolierung des Kabels ausübt.

Ferner kann zumindest eines der Andrückelemente als Platte oder Walze ausgebildet sein. Eine Platte hat sich insbesondere dahingehend bewährt, dass eine präzise Anordnung und, wenn eines der Andrückelemente bewegbar ist, ein Abrollen des Kabels auf der Platte gewährleistet ist. Eine Walze zeichnet sich unter anderem durch den relativ einfachen Antriebsmechanismus aus.

Wenn die Andrückelemente als Platten ausgebildet sind, ist es bevorzugt, dass zumindest eines der Andrückelemente in einer Ebene parallel zum jeweils anderen Andrückelement bewegbar ist. Somit kann das Kabel bei gleichbleibendem oder im Wesentlichen gleichbleibendem Druck abgerollt werden.

Gemäß einer weiteren Ausführungsform weist zumindest eines der Andrückelemente an einer Wirkseite eine Beschichtung, insbesondere eine gummierte Oberfläche, auf. Die Wirkseite ist dabei diejenige Seite, die mit dem Kabel in Kontakt kommt. Eine gummierte Oberfläche hat sich dahingehend bewährt, dass das Kabel gewissermaßen elastisch in die Oberfläche eingedrückt werden kann. In jedem Fall werden Beschädigungen des Kabels vermieden. Insbesondere ist eine gummierte Oberfläche bei Kabeln mit einer vergleichsweise weichen/nachgiebigen Isolierung geeignet.

Gemäß einer weiteren Ausführungsform weist zumindest eine der Andrückelemente an einer Wirkseite eine strukturierte Fläche auf. Eine strukturierte Fläche kann beispielsweise eine Vielzahl von Vertiefungen aufweisen. Auf diese Weise kann eine Mitnahme des Kabels bei einer Bewegung des Andrückelements noch sicherer gewährleistet werden. Insbesondere bei Kabeln mit einer vergleichsweise harten/unnachgiebigen Isolierung ist diese Ausgestaltung vorteilhaft.

Gemäß einer bevorzugten Ausführungsform können die Andrückelemente in parallelen Ebenen und/oder tangential zu dem zwischen den Andrückelementen angeordneten Kabel bewegbar sein, sodass das zwischen den Andrückelementen aufgenommene Kabel mit im Wesentlichen gleichbleibendem Druck gerollt wird.

Hierzu ist es bevorzugt, dass die Andrückelemente gegenläufig bewegbar sind, sodass eine platzsparende Anordnung ermöglicht wird.

In einer weiteren Ausführungsform kann ein erstes Andrückelement derart verstellbar sein, dass durch eine Verstellbewegung des Andrückelements ein Abstand zu einem zweiten Andrückelement eingestellt wird. Somit können die Andrückelemente geöffnet werden, um das Kabel zwischen die Andrückelemente einzuführen, und geschlossen werden, um einen radialen Druck auf das Kabel aufzubringen.

Die Kabelaufbereitungseinrichtung kann eingerichtet sein, vor der Freigabe des Kabels von der Kabelaufbereitungseinrichtung die Andrückelemente teilweise oder während einer Bewegung, insbesondere einem Hin- und Herbewegen voneinander zu entfernen (beispielsweise durch Wegbewegen eines der Andrückelemente vom jeweils anderen Andrückelement). Auf diese Weise kann das Kabel wieder in eine zylindrische Form geformt werden.

Ferner kann es vorgesehen sein, dass die Kabelaufbereitungseinrichtung eine Einrichtung zum Erfassen und Einstellen der Kraft zum Drücken des Kabels aufweist. Somit kann die Kraft, die zum Drücken auf das Kabel einwirkt, präzise eingestellt und gegebenenfalls an unterschiedliche Kabelmaterialien oder Kabeldurchmesser angepasst werden. Somit können auch Litzenverformungen oder Litzenbeschädigungen vermieden werden.

Gemäß einer weiteren Ausgestaltung ist die Kabelaufbereitungseinrichtung in einer Kabelzuführ-Richtung, insbesondere in einer Richtung, in der ein Kabel zur Abisoliervorrichtung zugeführt wird, neben der Abisoliervorrichtung angeordnet.

Ferner kann es vorgesehen sein, dass eine Kabelaufbereitungseinrichtung, in einer Kabelzuführ-Richtung zur Abisoliervorrichtung betrachtet, vor oder hinter der Abisoliervorrichtung angeordnet ist. Bei dieser Modifikation genügt eine Bewegung des Kabels in der Kabelzuführ-Richtung, um einen Abschnitt des Kabels, der aufbereitet und abisoliert werden soll, von der Kabelaufbereitungseinrichtung zur Abisoliervorrichutng zu führen.

Gemäß einer weiteren Modifikation ist eine Kabelaufbereitungseinrichtung in die Abisoliervorrichtung derart integriert, dass das Drücken des Kabels zumindest anteilig mittels einer Bewegung der Abisoliervorrichtung durchgeführt wird. Beispielsweise können in die Abisoliervorrichtung zwei federgelagerte Walzen (insbesondere oberhalb und/oder unterhalb, gegebenenfalls auch axial versetzt, im Vergleich zu den Messern der Abisoliervorrichtung) integriert sein, die aufeinander rollen und so auf den Abisolierbereich des Kabels drücken.

Ferner kann ein Kabelgreifer mit der Kabelaufbereitungseinrichtung vorgesehen sein. Dieser Kabelgreifer kann derart modifiziert sein, dass insbesondere ein Abschnitt des Kabels beim Zuführen oder bei der Übergabe zu einer Vorrichtung gedrückt werden kann.

Gemäß einer weiteren Ausführungsform ist ein Kabelgreifer vorgesehen, der eingerichtet ist, ein Kabel von der Kabelaufbereitungseinrichtung zur Abisoliervorrichtung zuführen. Der Kabelgreifer kann dabei beispielsweise Greifelemente aufweisen, um ein Kabel zu klemmen. Ferner kann das Kabel auf andere Weise gehalten werden.

Die Kabelbearbeitungsvorrichtung kann eine Crimpeinrichtung zum Anbringen eines Kontaktelements an einem abisolierten Abschnitt des Kabels aufweisen. Somit wird in die Kabelbearbeitungsvorrichtung eine Crimpeinrichtung integriert und die Funktionalität der Kabelbearbeitungsvorrichtung gesteigert.

Ferner kann es vorgesehen sein, dass die Crimpeinrichtung benachbart zur Abisoliervorrichtung angeordnet ist, um eine zügige Übergabe von der Abisoliervorrichtung zur Crimpeinrichtung zu gewährleisten.

Gemäß einer weiteren Ausführungsform umfasst die Kabelbearbeitungsvorrichtung ferner eine Zuführeinrichtung zum Zuführen des Kabels, insbesondere zum Zuführen des Kabels zu einem Kabelgreifer, wobei die Kabelaufbereitungseinrichtung an der Zuführeinrichtung aufgenommen ist. Auf diese Weise kann ein Aufbereiten oder Bearbeiten des Kabels beim Zuführen, insbesondere beim Zuführen des Kabels zum Kabelgreifer, erfolgen.

Ferner wird ein Verfahren zum Verarbeiten eines eine Isolierung aufweisenden Kabels bereitgestellt, das die Schritte aufweist: Drücken der Isolierung in einem abzuisolierenden Bereich des Kabels, und Abisolieren der Isolierung vom Kabel.

Dies hat den Vorteil, dass in dem Bereich des Kabels, in dem die Isolierung abisoliert werden soll, durch Drücken der Isolierung bereits ein Lösen der Isolierung von den Litzen eintritt. Es hat sich gezeigt, dass damit ein Anhaften der Isolierung an den Litzen vermieden oder stark reduziert werden kann. Bezüglich weiterer Vorteile wird auf die Erläuterungen zur Kabelbearbeitungsvorrichtung verwiesen.

Das Drücken kann insbesondere ein Kneten oder ein Walzen sein, um das Kabel für ein Abisolieren aufzubereiten.

Ein Drücken kann durch Aufbringen eines Drucks in einer Richtung erfolgen, oder das Drücken kann durch eine alternierende, translatorische Bewegung erfolgen. Ferner kann das Drücken durch ein Walzen des Kabels unter Druckbeaufschlagung erfolgen. Die genannten Ausführungsformen können auch in Kombination eingesetzt werden.

Das Drücken des Kabels kann durch eine Bewegung, insbesondere eine Hin- und Herbewegung oder eine Drehbewegung, zumindest eines Andrückelements, erfolgen. Auch können mehrere Andrückelemente, insbesondere gegenläufig, bewegt werden.

Insbesondere kann das Andrückelement oder die Andrückelemente als eine Platte oder als eine Walze ausgebildet sein.

Das Kabel kann mittels eines Kabelgreifers gehalten werden, und insbesondere von der Kabelaufbereitungseinrichtung zur Abisoliervorrichtung bewegt werden.

Ferner kann im Zuge des Verfahrens der Schritt des Anbringens eines Kontaktelements am abisolierten Abschnitt des Kabels durchgeführt werden.

Als besonders vorteilhaft hat sich das Verfahren bei der Verarbeitung von Kabeln erwiesen, die eine Silikonkautschuk-Isolierung aufweisen. Durch das Drücken eines Abschnitts der Isolierung kann ein bei der Kabelherstellung zwischen die Litzen "geflossenes" Kabelisolationsmaterial, das gewisse Verklebung der Isolierung mit Litzen hervorruft, gelöst werden.

Das Verfahren ist vorteilhaft bei Isolationsmaterialien, die zur Anhaftung an den Litzen neigen, wie dies beispielsweise bei Silikonkautschuk-Isolierungen auftritt.

Ferner eignet sich das Verfahren bei Isolierungen, die dazu neigen, beim Umspritzen der (Kupfer-)Litzen tief in die Zwischenräume der Litzen einzudringen.

Gemäß einer weiteren Ausführungsform ist das Verfahren für Isolierungen vorteilhaft, die eine geringe Weiter-Rissneigung aufweisen. Auch dies kann beispielsweise bei Silikonkautschuk-Isolierungen auftreten.

Ferner eignet sich das Verfahren für Isolierungen, die aufgrund ihrer tribologischen Eigenschaften einen hohen Reibwert zwischen dem Isolationsmaterial und den Litzen aufweisen.

Im Rahmen des Verfahrens kann ein Litzen und eine Isolierung umfassendes Kabel verarbeitet werden. Ferner kann es vorgesehen sein, dass es sich dabei um ein mehradriges Kabel oder ein geschirmtes Kabel handelt.

Bei einem geschirmten Kabel kann vor einer Vorbehandlung mittels der Kabelaufbereitungseinrichtung der äußere Kabelmantel und die Schirmung entfernt werden, oder das geschirmte Kabel wird mit dem Kabelmantel und der Schirmung mittels der Kabelaufbereitungseinrichtung vorbehandelt. Entsprechend kann bei einem mehradrigen Kabel der äußere Kabelmantel nach dem Vorbehandeln entfernt sein, oder der äußere Kabelmantel wird mittels der Kabelaufbereitungseinrichtung entfernt.

Nach dem Drücken des Kabels und vor der Freigabe des Kabels kann es gemäß einer Modifikation des Verfahrens vorgesehen sein, dass Andrückelemente zum Drücken des Kabels teilweise oder während deren Hin- und Herbewegung voneinander entfernt werden. Auf diese Weise kann das Kabel wieder in eine zylindrische Form geformt werden.

### Kurze Beschreibung der Zeichnungen

- Fig. 1: ist eine schematische Ansicht einer ersten Ausführungsform der Erfindung.
- Fig. 2: ist eine schematische Ansicht einer zweiten Ausführungsform der Erfindung.
- Fig. 3: zeigt eine dritte Ausführungsform der Erfindung, bei der eine Kabelaufbereitungseinrichtung an einer Kabelzuführung vorgesehen ist.
- Fig. 4: zeigt eine vierte Ausführungsform der Erfindung, bei der eine Kabelaufbereitungseinrichtung an einer Abisoliervorrichtung vorgesehen ist.
- Fig. 5: zeigt eine fünfte Ausführungsform der Erfindung, bei der eine Kabelaufbereitungseinrichtung an einem Kabelgreifer aufgenommen ist.

### Detaillierte Beschreibung der bevorzugten Ausführungsformen

Anhand der Figuren werden bevorzugte Ausführungsformen der Erfindung beschrieben. Obwohl die Ausführungsformen rein beispielhaft, und nicht einschränkend, zu verstehen sind, können Einzelmerkmale der Ausführungsform zur Spezifizierung der Erfindung herangezogen werden. Ferner können Modifikationen der nachfolgend beschriebenen Ausführungsform jeweils einzeln miteinander kombiniert werden, um weitere Ausführungsformen der Erfindung auszubilden.

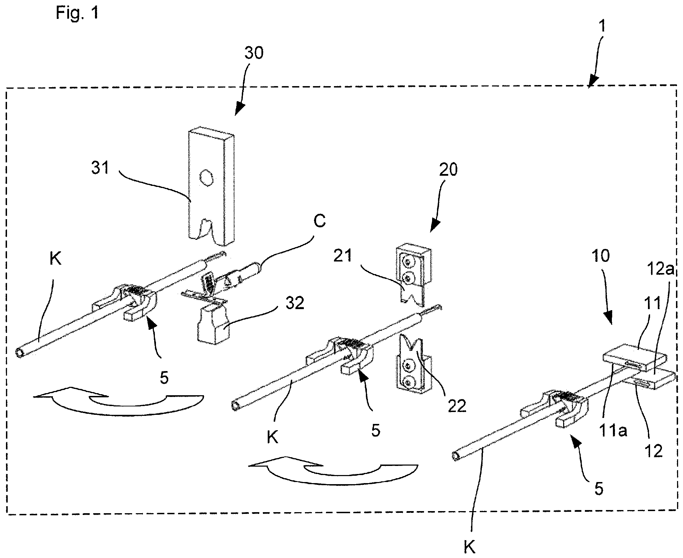

Fig. 1 zeigt eine erste Ausführungsform einer Kabelbearbeitungsvorrichtung 1 zur Verarbeitung eines eine Isolierung aufweisenden Kabels K. Die Kabelbearbeitungsvorrichtung 1 ist in den Figuren zur Veranschaulichung lediglich schematisch dargestellt. Allerdings kann die Kabelbearbeitungsvorrichtung 1 ein Gehäuse aufweisen, in dem die nachfolgend erläuterten Einheiten integriert oder an dem diese Einheiten angebracht sind.

Die Kabelbearbeitungsvorrichtung 1 umfasst eine Kabelaufbereitungseinrichtung 10, eine Abisoliervorrichtung 20 sowie eine Crimpeinrichtung 30. Die Kabelaufbereitungseinrichtung 10, die Abisoliervorrichtung 20 und die Crimpeinrichtung 30 sind jeweils benachbart zueinandern angeordnet. Ein Kabelgreifer 5 kann ein Kabel K zu den genannten Einheiten bewegen. Anstelle eines Kabelgreifers kann jedoch auch eine manuelle Kabelzufuhr vorgesehen sein.

Die Kabelaufbereitungseinrichtung 10 ist eingerichtet, durch Drücken der Isolierung das Kabel K für ein Abisolieren eines Abschnitts der Isolierung vorzubereiten. Hierzu weist die Kabelaufbereitungseinrichtung 10 eine erste Platte 11 sowie eine zweite Platte 12 auf. Die erste Platte 11 ist an einer zur zweiten Platte 12 weisenden Seite mit einer Beschichtung 11a versehen (beispielsweise einer gummierten Oberfläche), um eine schonende Einwirkung auf das Kabel K zu gewährleisten und eine Beschädigung des Kabels K zu vermeiden. Ebenso weist die zweite Platte 12 eine entsprechende Beschichtung 12a auf, die an der zur ersten Platte 11 weisenden Seite der zweiten Platte 12 vorgesehen ist.

Im ersten Ausführungsbeispiel ist die erste Platte 11 in einer Richtung senkrecht zur zweiten Platte 12 bewegbar, um einen Abstand zur zweiten Platte 12 einzustellen und in einem geöffneten Zustand, in dem die erste Platte 11 von der zweiten Platte 12 wegbewegt wurde, ein Einführen eines Abschnitts des Kabels K in einen Bereich zwischen der ersten Platte 11 und der zweiten Platte 12 zu gewährleisten. Beim Schließen der Kabelaufbereitungseinrichtung 10 kann ein Spalt zwischen der ersten Platte 11 und der zweiten Platte 12 derart eingestellt werden, dass die Platten 11, 12 einen radialen Anpressdruck am Kabel K ausüben.

Die zweite Platte 12 ist in einer Ebene, die parallel zur Anordnungsebene der ersten Platte 11 angeordnet ist, hin- und her bewegbar. Hierfür kann beispielsweise ein nicht gezeigter Exzenterantrieb oder Ähnliches vorgesehen sein. Ferner ist auch die erste Platte 11 in einer Ebene, die parallel zur Anordnungsebene der zweiten Platte 12 vorgesehen ist, hin- und her bewegbar.

Gemäß einer Modifikation der Kabelaufbereitungseinrichtung 10 kann jedoch auch nur eine der Platten, beispielswiese die erste Platte 11, in einer zur Anordnungsebene der jeweils anderen Platte parallelen Ebene bewegbar sein, wohingegen die jeweils andere Platte, beispielsweise die Platte 12, stationär angeordnet ist.

Die Kabelaufbereitungseinrichtung 10 weist eine Einrichtung (Sensor) zum Erfassen der Kraft zum Drücken der Isolierung auf. Somit kann der auf das Kabel wirkende radiale Druck eingestellt werden, beispielsweise in Abhängigkeit von einem Material der Isolierung.

Ferner umfasst die Kabelbearbeitungsvorrichtung 1 die Abisoliervorrichtung 20, die ein erstes Messer 21 und ein zweites Messer 22 aufweist. Die Messer 21, 22 können derart relativ zueinander bewegt werden, dass die Messer 21, 22 in die Isolierung des Kabels K eindringen können. Ferner kann mit den Messern eine in Erstreckungsrichtung des Kabels K ausgerichtete Bewegung durchgeführt werden, um den Abschnitt der Isolierung, der mit den Messern 21, 22 eingeschnitten und zumindest teilweise abgetrennt wurde, vom Kabel K abzuziehen.

Die Crimpeinrichtung 30 umfasst einen Crimpstempel 31 sowie einen Amboss 32, um ein Kontaktelement C an einem abisolierten Abschnitt des Kabels K anzubringen.

Im Ausführungsbeispiel sind die Kabelaufbereitungseinrichtung 10, die Abisoliervorrichtung 20 sowie die Crimpvorrichtung 30 benachbart zueinander vorgesehen. Somit kann der Kabelgreifer 5 das Kabel K zunächst zur Kabelaufbereitungseinrichtung 10, nachfolgend zur Abisoliervorrichtung 20, und daraufhin zur Crimpeinrichtung 30 führen.

Ein beispielhafter Verfahrensablauf ist wie folgt: Zunächst wird das Kabel K mit dem Kabelgreifer 5 gegriffen und ein Abschnitt des Kabels K in den Bereich der Kabelaufbereitungseinrichtung 10 geführt. Die erste Platte 11 der Kabelaufbereitungseinrichtung 10 wird in Richtung der zweiten Platte 12 geführt, sodass ein definierter, radialer Druck auf das zwischen der ersten Platte 11 und der zweiten Platte 12 angeordnete Kabel K ausgeübt wird. Nachfolgend werden die Platten 11, 12 gegenläufig hin und her bewegt. Dabei kann eine Bewegungslänge insbesondere am Wert des Kabelumfangs orientiert sein, so dass die Belastung entlang der Isolierung (in tangentialer Richtung) über den vollständigen Umfang erfolgen kann. Somit kann auch der Zyklus der Bearbeitung nach dem Umfang des Kabels optimiert werden.

Auf diese Weise wird die Isolierung von den Litzen des Kabels K gelöst. Während dieser Bearbeitung hält der Kabelgreifer 5 das Kabel K weiterhin, wobei es auch möglich ist, das Kabel K in eine (nicht dargestellte) Halteeinrichtung der Kabelaufbereitungseinrichtung 10 zu übergeben. Ferner kann es vorgesehen sein, dass der Kabelgreifer 5 bei einer Betätigung der Kabelaufbereitungseinrichtung 10 eine rotatorische Bewegung des Kabels zulässt.

Bevor die Kabelaufbereitungseinrichtung 10 das Kabel K freigibt, kann es gemäß einer Modifikation des Verfahrens vorgesehen sein, dass die Platten 11, 12 teilweise oder während deren Hin- und Herbewegung voneinander entfernt werden. Auf diese Weise kann das Kabel wieder in eine zylindrische Form geformt werden.

Nachfolgend führt der Kabelgreifer 5 das Kabel K zur Abisoliervorrichtung 20, wo ein Abschnitt der Isolierung vom Kabel K abisoliert wird. In Fig. 1 wird das Kabel hierbei bereits mit einem abisolierten Abschnitt des Kabels K gezeigt.

Nach dem Abisolieren eines Abschnitts der Isolierung des Kabels K führt der Kabelgreifer 5 das Kabel K in den Bereich der Crimpeinrichtung 30, wo ein Kontaktelement C am abisolierten Abschnitt des Kabels K angebracht wird.

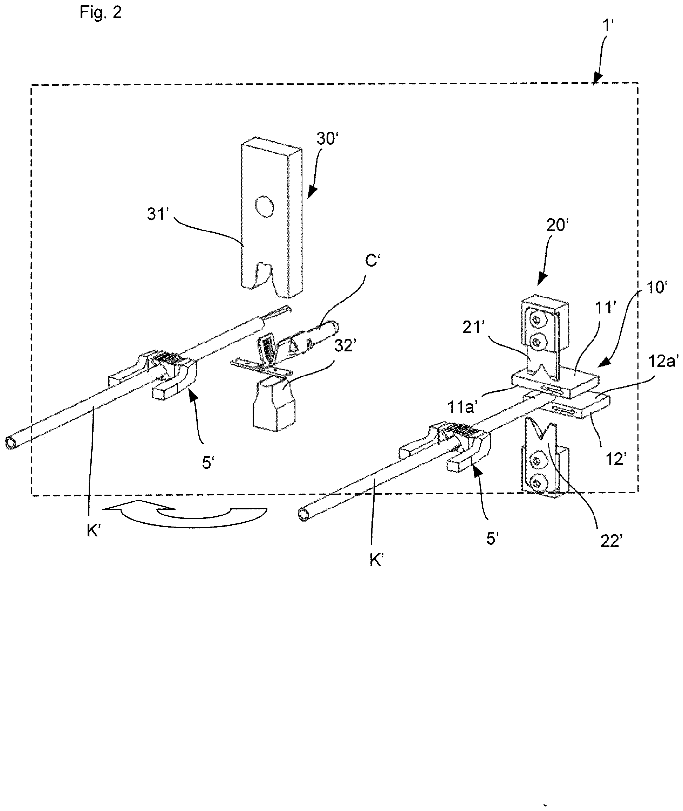

Anhand von Fig. 2 wird eine zweite Ausführungsform einer Kabelbearbeitungsvorrichtung 1' erläutert. Ähnlich wie die Kabelbearbeitungsvorrichtung 1 umfasst auch die Kabelbearbeitungsvorrichtung 1' gemäß der zweiten Ausführungsform eine Kabelaufbereitungseinrichtung 10', eine Abisoliervorrichtung 20' sowie eine Crimpeinrichtung 30'. Bezüglich dieser Einheiten, weiteren Aspekten der Kabelbearbeitungsvorrichtung 1', wie einem Gehäuse der Kabelbearbeitungsvorrichtung 1', sowie Modifikationen hiervon wird ergänzend auf die Erläuterungen zur ersten Ausführungsform verwiesen.

Die Kabelaufbereitungseinrichtung 10' ist eingerichtet, durch Drücken der Isolierung das Kabel K' für ein Abisolieren eines Abschnitts der Isolierung vorzubereiten. Hierzu weist die Kabelaufbereitungseinrichtung 10' eine erste Platte 11' mit einer Beschichtung (oder strukturierten Fläche) 11a' sowie eine zweite Platte 12 mit einer Beschichtung (oder strukturierten Fläche) 12a' auf. Das Kabel K' wird mittels eines Kabelgreifers 5' gehalten und kann mittels des Kabelgreifers 5' bewegt werden.

Die Abisoliervorrichtung 20' weist ein erstes Messer 21' und ein zweites Messer 22' auf. Die Messer 21', 22' können derart relativ zueinander bewegt werden, dass die Messer 21', 22' in die Isolierung des Kabels K' eindringen können. Ferner kann mit den Messern eine in Erstreckungsrichtung des Kabels K' ausgerichtete Bewegung durchgeführt werden, um den Abschnitt der Isolierung, der mit den Messern 21', 22 'eingeschnitten und zumindest teilweise abgetrennt wurde, vom Kabel K' abzuziehen.

Die Crimpeinrichtung 30' umfasst einen Crimpstempel 31' sowie einen Amboss 32', um ein Kontaktelement C' an einem abisolierten Abschnitt des Kabels K' anzubringen.

Die Kabelbearbeitungsvorrichtung 1' gemäß der zweiten Ausführungsform unterscheidet sich von derjenigen der ersten Ausführungsform darin, dass die Kabelaufbereitungseinrichtung 10', in einer Kabelzuführ-Richtung (Kabelerstreckungsrichtung) zur Kabelisoliervorrichtung 20' betrachtet, hinter der Abisoliervorrichtung 20' angeordnet ist. Gemäß einer Modifikation kann die Kabelaufbereitungseinrichtung 10', in einer Kabelzuführ-Richtung zur Kabelisoliervorrichtung 20' betrachtet, auch vor der Abisoliervorrichtung 20' angeordnet sein. Durch eine Bewegung des Kabels K' in der Kabelerstreckungsrichtung kann das Kabel K' von der Kabelaufbereitungseinrichtung 10' zur Kabelisoliervorrichtung 20' bewegt werden.

Demnach unterscheidet sich der Verfahrensablauf der zweiten Ausführungsform gegenüber demjenigen der ersten Ausführungsform darin, dass der Kabelgreifer 5' das Kabel K zunächst in der Kabelzuführ-Richtung/ Kabelerstreckungsrichtung durch die Messer 21', 22' der Abisoliervorrichtung 20' führt, sodass ein Bearbeiten der Isolierung des Kabels K' durch die Kabelaufbereitungseinrichtung 10' erfolgen kann. Nachfolgend wird der Kabelgreifer 5' zurückgestellt, sodass ein Abschnitt der Isolierung des Kabels K' durch die Abisoliervorrichtung 20' abisoliert werden kann. In einem weiteren Verfahrensschritt führt der Kabelgreifer 5' das Kabel K' in den Bereich der Crimpeinrichtung 30', die ein Kontaktelement C an einem abisolierten Abschnitt des Kabels K' anbringt.

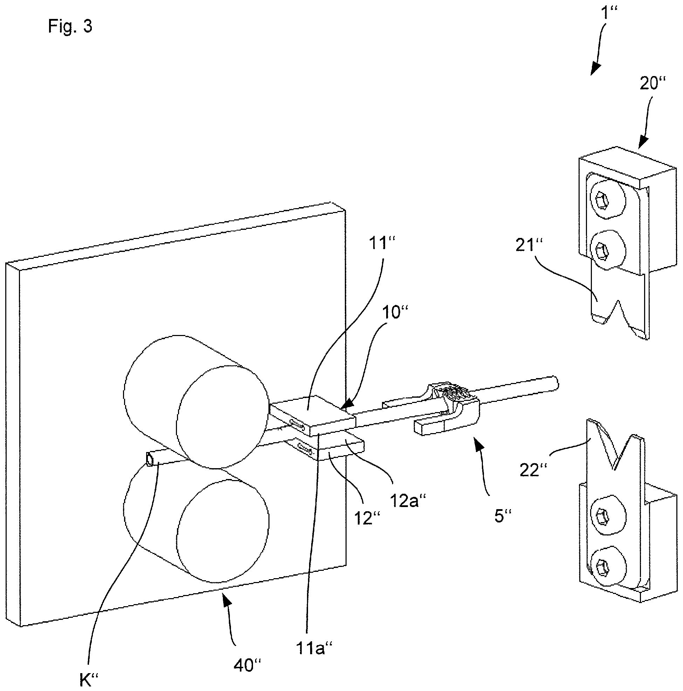

Anhand von Fig. 3 wird eine dritte Ausführungsform einer Kabelbearbeitungsvorrichtung 1" erläutert. Ähnlich wie die Kabelbearbeitungsvorrichtungen gemäß den vorangegangenen Ausführungsformen umfasst auch die Kabelbearbeitungsvorrichtung 1" gemäß der dritten Ausführungsform eine Kabelaufbereitungseinrichtung 10" sowie eine Abisoliervorrichtung 20". Ferner kann die Kabelbearbeitungsvorrichtung 1" eine Crimpeinrichtung wie in der ersten oder zweiten Ausführungsform umfassen, wobei die Crimpeinrichtung an dieser Stelle zur Veranschaulichung weggelassen wurde. Bezüglich dieser Einheiten, weiteren Aspekten der Kabelbearbeitungsvorrichtung 1", wie einem Gehäuse der Kabelbearbeitungsvorrichtung 1", sowie Modifikationen hiervon wird ergänzend auf die Erläuterungen zu den vorangegangenen Ausführungsformen verwiesen.

Die Kabelaufbereitungseinrichtung 10" ist eingerichtet, durch Drücken der Isolierung, das Kabel K" für ein Abisolieren eines Abschnitts der Isolierung vorzubereiten. Hierzu weist die Kabelaufbereitungseinrichtung 10" eine erste Platte 11" mit einer Beschichtung (oder strukturierten Fläche) 11a" sowie eine zweite Platte 12" mit einer Beschichtung (oder strukturierten Fläche) 12a" auf. Das Kabel K" wird mittels eines Kabelgreifers 5" gehalten und kann mittels des Kabelgreifers 5" bewegt werden.

Die Abisoliervorrichtung 20" weist ein erstes Messer 21" und ein zweites Messer 22" auf. Die Messer 21", 22" können derart relativ zueinander bewegt werden, dass die Messer 21", 22" in die Isolierung des Kabels K" eindringen können. Ferner kann mit den Messern eine in Erstreckungsrichtung des Kabels K" ausgerichtete Bewegung durchgeführt werden, um den Abschnitt der Isolierung, der mit den Messern 21", 22" eingeschnitten und zumindest teilweise abgetrennt wurde, vom Kabel K" abzuziehen.

Ferner weist die Kabelbearbeitungsvorrichtung 1" eine Zuführeinrichtung 40" auf, um das Kabel K" dem Kabelgreifer 5" zuzuführen. Die Zuführeinrichtung 40" umfasst beispielsweise Förderrollen, wobei in Figur 3 lediglich beispielhaft zwei Förderrollen gezeigt sind. Die Kabelaufbereitungseinrichtung 10" ist dabei an der Zuführeinrichtung 40" integriert, sodass ein Aufbereiten des Kabels K" beim Zuführen des Kabels K" zum Kabelgreifer 5" erfolgen kann.

Insbesondere wird ein Abschnitt des Kabels K" beim Zuführen oder bei der Übergabe gedrückt, sodass ein Drücken des Kabels K" mittels der Kabelaufbereitungseinrichtung 10" im Zuge des Zuführens des Kabels K" erfolgen kann.

Gemäß einer weiteren Modifikation umfasst die Kabelaufbereitungseinrichtung ("schwimmend" gelagerte) Walzen, die das Kabel axial sowie senkrecht dazu bewegen und drücken können.

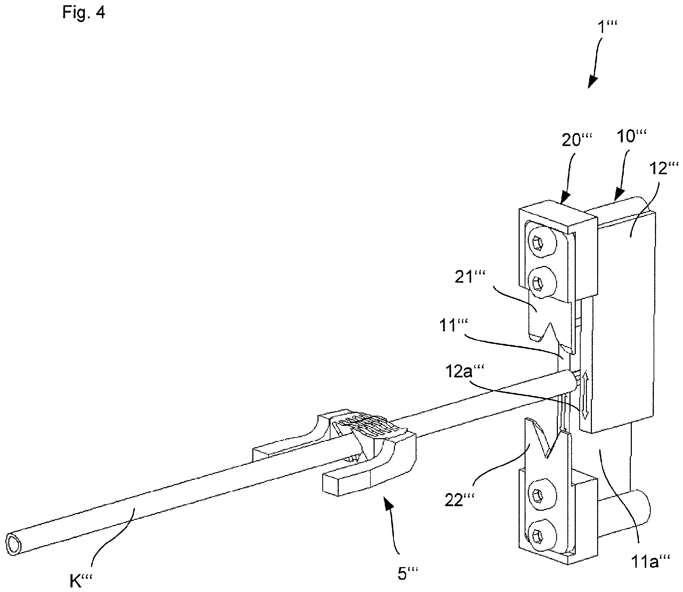

Fig. 4 zeigt eine vierte Ausführungsform einer Kabelbearbeitungsvorrichtung 1'''. Ähnlich wie die Kabelbearbeitungsvorrichtungen gemäß den vorangegangenen Ausführungsformen umfasst auch die Kabelbearbeitungsvorrichtung 1''' gemäß der vierten Ausführungsform eine Kabelaufbereitungseinrichtung 10''' sowie eine Abisoliervorrichtung 20'''. Ferner kann die Kabelbearbeitungsvorrichtung 1''' eine Crimpeinrichtung wie in der ersten oder zweiten Ausführungsform umfassen, wobei die Crimpeinrichtung zur Veranschaulichung weggelassen wurde. Bezüglich dieser Einheiten, weiteren Aspekten der Kabelbearbeitungsvorrichtung 1''', wie einem Gehäuse der Kabelbearbeitungsvorrichtung 1''', sowie Modifikationen hiervon wird ergänzend auf die Erläuterungen zu den vorangegangenen Ausführungsformen verwiesen.

Die Kabelaufbereitungseinrichtung 10''' ist eingerichtet, durch Drücken der Isolierung das Kabel K''' für ein Abisolieren eines Abschnitts der Isolierung vorzubereiten. Hierzu weist die Kabelaufbereitungseinrichtung 10''' eine erste Platte 11''' mit einer Beschichtung (oder strukturierten Fläche) 11a''' sowie eine zweite Platte 12''' mit einer Beschichtung (oder strukturierten Fläche) 12a''' auf. Die Platten 11''', 12''' sind im vorliegenden Ausführungsbeispiel vertikal ausgerichtet.

Das Kabel K''' wird mittels eines Kabelgreifers 5''' gehalten und kann mittels des Kabelgreifers 5''' bewegt werden.

Die Abisoliervorrichtung 20''' weist ein erstes Messer 21''' und ein zweites Messer 22''' auf. Die Messer 21''', 22''' können derart relativ zueinander bewegt werden, dass die Messer 21''', 22''' in die Isolierung des Kabels K''' eindringen können. Ferner kann mit den Messern eine in Erstreckungsrichtung des Kabels K''' ausgerichtete Bewegung durchgeführt werden, um den Abschnitt der Isolierung, der mit den Messern 21''', 22''' eingeschnitten und zumindest teilweise abgetrennt wurde, vom Kabel K''' abzuziehen.

Die Kabelaufbereitungseinrichtung 10''' ist gemäß der vierten Ausführungsform in die Abisoliervorrichtung 20''' derart integriert, dass das Drücken des Kabels K''' zumindest anteilig mittels einer Bewegung der Abisoliervorrichtung 20''' durchgeführt wird.

Insbesondere kann das Kabel K''' über die Schnittebene der Messer 21''', 22''' hinaus geführt und mittels der Kabelaufbereitungseinrichtung 10''' bearbeitet werden. Nachfolgend kann das Kabel K''' auf Höhe der Schnittebene der Messer zurückgezogen werden, sodass die Messer 21''', 22''' in die Isolierung einschneiden und diese abisolieren können.

Gemäß einer Modifikation der vierten Ausführungsform können in die Abisoliervorrichtung 20''' zwei federgelagerte Walzen (axial versetzt, im Vergleich zu den Messern der Abisoliervorrichtung) integriert sein, die aufeinander rollen und so den Abisolierbereich des Kabels drücken.

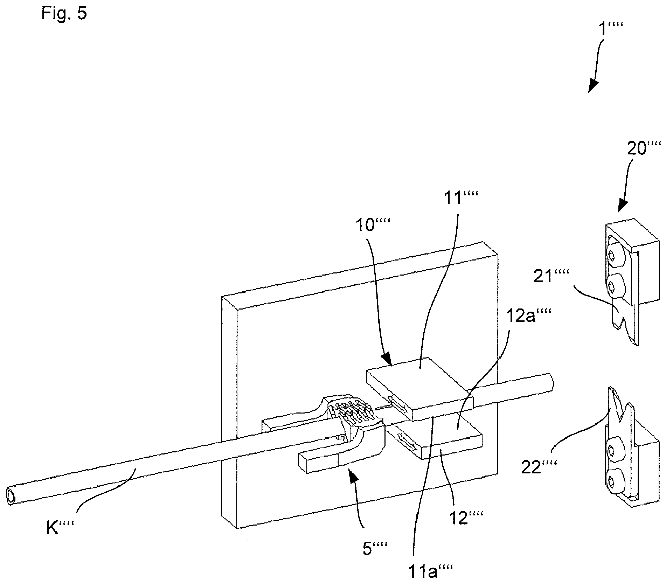

Anhand von Fig. 5 wird eine fünfte Ausführungsform einer Kabelbearbeitungsvorrichtung 1''''erläutert. Ähnlich wie die Kabelbearbeitungsvorrichtungen gemäß den vorangegangenen Ausführungsformen umfasst auch die Kabelbearbeitungsvorrichtung 1'''' gemäß der fünften Ausführungsform eine Kabelaufbereitungseinrichtung 10'''' sowie eine Abisoliervorrichtung 20''''. Ferner kann die Kabelbearbeitungsvorrichtung 1'''' eine Crimpeinrichtung wie in der ersten oder zweiten Ausführungsform umfassen, wobei die Crimpeinrichtung zur Veranschaulichung weggelassen wurde. Bezüglich dieser Einheiten, weiteren Aspekten der Kabelbearbeitungsvorrichtung 1'''', wie einem Gehäuse der Kabelbearbeitungsvorrichtung 1'''', sowie Modifikationen hiervon wird ergänzend auf die Erläuterungen zu den vorangegangenen Ausführungsformen verwiesen.

Die Kabelaufbereitungseinrichtung 10'''' ist eingerichtet, durch Drücken der Isolierung das Kabel K'''' für ein Abisolieren eines Abschnitts der Isolierung vorzubereiten. Hierzu weist die Kabelaufbereitungseinrichtung 10'''' eine erste Platte 11'''' mit einer Beschichtung (oder strukturierten Fläche) 11a'''' sowie eine zweite Platte 12'''' mit einer Beschichtung (oder strukturierten Fläche) 12a'''' auf. Das Kabel K'''' wird mittels eines Kabelgreifers 5'''' gehalten und kann mittels des Kabelgreifers 5'''' bewegt werden.

Die Abisoliervorrichtung 20'''' weist ein erstes Messer 21'''' und ein zweites Messer 22'''' auf. Die Messer 21'''', 22'''' können derart relativ zueinander bewegt werden, dass die Messer 21'''', 22'''' in die Isolierung des Kabels K'''' eindringen können. Ferner kann mit den Messern eine in Erstreckungsrichtung des Kabels K'''' ausgerichtete Bewegung durchgeführt werden, um den Abschnitt der Isolierung, der mit den Messern 21'''', 22'''' eingeschnitten und zumindest teilweise abgetrennt wurde, vom Kabel K'''' abzuziehen.

Gemäß der fünften Ausführungsform ist die Kabelaufbereitungseinrichtung 10'''' am Kabelgreifer 5'''' vorgesehen. Somit kann das Kabel K'''', während dieses mittels Greifelementen des Kabelgreifers 5'''' gestützt oder gehalten wird, mit der Kabelaufbereitungseinrichtung 10'''' gemäß einem bereits oben genannten Verfahren durch Drücken bearbeitet werden. Auf diese Weise ist die Funktion der Kabelaufbereitungseinrichtung 10'''' mit der Funktion des Kabelgreifers 5'''' kombiniert.

Obwohl gemäß der vorangegangenen Ausführungsformen beschrieben wurde, dass eine Kabelaufbereitungseinrichtung mit einer Abisoliervorrichtung in einer Kabelbearbeitungsvorrichtung zusammengefasst ist, kann es vorgesehen sein, dass die Kabelaufbereitungseinrichtung separat angeordnet ist und eine Übergabe eines aufbereiteten Kabels manuell oder mittels eines Kabelgreifers erfolgt.

Gemäß einer weiteren Modifikation der vorangegangenen Ausführungsformen kann die Kabelaufbereitungseinrichtung anstelle einer Platte auch eine Walze aufweisen. Auch können mehrere Walzen vorgesehen sein, beispielsweise zwei, drei oder mehr Walzen, die derart benachbart angeordnet sind, dass ein Kabel zwischen die Walzen geführt werden kann.

Dabei kann wahlweise die Walze oder die Anordnung mehrerer Walzen um das zugeführte Kabel rotativ bewegt werden, oder das Kabel selbst wird manuell oder mittels des Kabelgreifers gedreht, um eine Relativbewegung zwischen der oder den Walzen und dem Kabel zu erhalten.

Um das Kabel in die gewünschte Position der Kabelaufbereitungseinrichtung zu führen, kann das Kabel durch eine entsprechende Bewegung eingeführt werden. Gemäß einer Modifikation kann auch die Kabelaufbereitungseinrichtung in Ihrer Position relativ zum Kabel verändert werden. Auch eine Kombination aus mehreren Bewegungen kann vorteilhaft sein.

Obwohl gemäß der vorangegangenen Ausführungsformen ein Litzen und eine Isolierung umfassendes Kabel beschrieben wurde, kann es sich gemäß weiteren Modifikationen auch um ein mehradriges Kabel oder ein geschirmtes Kabel handeln.

Bei einem geschirmten Kabel kann vor einer Vorbehandlung mittels der Kabelaufbereitungseinrichtung der äußere Kabelmantel und die Schirmung entfernt werden, oder das geschirmte Kabel wird mit dem Kabelmantel und der Schirmung mittels der Kabelaufbereitungseinrichtung vorbehandelt. Entsprechend kann bei einem mehradrigen Kabel der äußere Kabelmantel nach dem Vorbehandeln entfernt sein, oder der äußere Kabelmantel wird mittels der Kabelaufbereitungseinrichtung entfernt.

## Patentansprüche

1. Kabelbearbeitungsvorrichtung (1-1''''), umfassend:
eine Abisoliervorrichtung (20-20 '''') zum Abisolieren eines Abschnitts einer Isolierung eines Kabels (K-K''''),
**gekennzeichnet durch**
eine Kabelaufbereitungseinrichtung (10-10''''), die eingerichtet ist, durch Drücken der Isolierung das Kabel (K-K'''') für ein Abisolieren aufzubereiten.

2. Kabelbearbeitungsvorrichtung (1-1'''') gemäß Anspruch 1, wobei die Kabelaufbereitungseinrichtung Andrückelemente (11-11''''; 12-12'''') aufweist, wobei zumindest eines der Andrückelemente bewegbar ist.

3. Kabelbearbeitungsvorrichtung (1-1'''') gemäß Anspruch 2, wobei zumindest eines der Andrückelemente (11-11''''; 12-12'''') eine Platte oder eine Walze ist.

4. Kabelbearbeitungsvorrichtung (1-1'''') gemäß Anspruch 2 oder 3, wobei zumindest eines der Andrückelemente (11-11''''; 12-12'''') an einer Wirkseite eine Beschichtung (11a-11a''''; 12a-12a''''), insbesondere eine gummierte Oberfläche, und/oder eine strukturierte Fläche aufweist.

5. Kabelbearbeitungsvorrichtung (1-1'''') gemäß einem der Ansprüche 2-4, wobei die Andrückelemente (11-11''''; 12-12'''') in parallelen Ebenen bewegbar sind, wobei bevorzugt ist, dass die Andrückelemente gegenläufig bewegbar sind.

6. Kabelbearbeitungsvorrichtung (1-1'''') gemäß einem der Ansprüche 2-5, wobei ein erstes Andrückelement (11-11'''') derart verstellbar ist, um einen Abstand zu einem zweiten Andrückelement (12-12'''') einzustellen.

7. Kabelbearbeitungsvorrichtung (1-1'''') gemäß einem der vorangegangenen Ansprüche, wobei die Kabelaufbereitungseinrichtung (10-10'''') eine Einrichtung zum Erfassen und Einstellen der Kraft zum Drücken der Isolierung aufweist.

8. Kabelbearbeitungsvorrichtung (1-1'''') gemäß einem der vorangegangenen Ansprüche, wobei
die Kabelaufbereitungseinrichtung (10) in einer Kabelzuführ-Richtung zur Abisoliervorrichtung (20) betrachtet, neben der Abisoliervorrichtung (20) angeordnet ist,
oder
die Kabelaufbereitungseinrichtung (10', 10"), in einer Kabelzuführ-Richtung zur Abisoliervorrichtung (20', 20") betrachtet, vor oder hinter der Abisoliervorrichtung (20', 20") angeordnet ist,
oder
die Kabelaufbereitungseinrichtung (10''') in die Abisoliervorrichtung (20''') integriert ist.

9. Kabelbearbeitungsvorrichtung (1-1', 1"-1'''') gemäß einem der vorangegangenen Ansprüche, ferner umfassend einen Kabelgreifer (5-5''''),
der eingerichtet ist, das Kabel (K-K'''') von der Kabelaufbereitungseinrichtung (10-10', 10''') zur Abisoliervorrichtung (20-20'''') zu führen,
oder der Kabelgreifer (5'''') die Kabelaufbereitungseinrichtung (10'''') aufweist.

10. Kabelbearbeitungsvorrichtung (1, 1') gemäß einem der vorangegangenen Ansprüche, ferner umfassend eine Crimpeinrichtung (30, 30') zum Anbringen eines Kontaktelements (C, C') an einem abisolierten Abschnitt des Kabels (K, K').

11. Kabelbearbeitungsvorrichtung (1") gemäß einem der vorangegangenen Ansprüche, ferner umfassend eine Zuführeinrichtung (40") zum Zuführen des Kabels (K"), wobei die Kabelaufbereitungseinrichtung (10") an der Zuführeinrichtung (40") aufgenommen ist.

12. Verfahren zum Verarbeiten eines eine Isolierung aufweisenden Kabels (K-K''''), umfassend die Schritte:
Drücken der Isolierung in einem abzuisolierenden Bereich des Kabels (K-K''''), und
Abisolieren eines Abschnitts der Isolierung vom Kabel (K-K'''').

13. Verfahren gemäß Anspruch 12, wobei das Drücken des Kabels (K-K'''') durch eine Bewegung, insbesondere eine Hin- und Herbewegung oder eine Drehbewegung, zumindest eines Andrückelements (11-11''''; 12-12'''') erfolgt.

14. Verfahren gemäß Anspruch 12 oder 13, wobei das Kabel (K-K'''') mittels eines Kabelgreifers (5-5'''') gehalten wird.

15. Verfahren gemäß einem der Ansprüche 12-14, ferner umfassend den Schritt: Anbringen eines Kontaktelements (C, C') am abisolierten Abschnitt des Kabels (K, K').

## Geänderte Patentansprüche

### Geänderte Patentansprüche gemäss Regel 137(2) EPÜ.

1. Kabelbearbeitungsvorrichtung (1-1ʺʺ), umfassend:
eine Abisoliervorrichtung (20-20ʺʺ) zum Abisolieren eines Abschnitts einer Isolierung eines Kabels (K-Kʺʺ),
**gekennzeichnet durch**
eine Kabelaufbereitungseinrichtung (10-10ʺʺ), die eingerichtet ist, durch Drücken der Isolierung das Kabel (K-Kʺʺ) für ein Abisolieren aufzubereiten,
wobei das Drücken kann durch eine alternierende, translatorische Bewegung erfolgt.

2. Kabelbearbeitungsvorrichtung (1-1ʺʺ) gemäß Anspruch 1, wobei die Kabelaufbereitungseinrichtung Andrückelemente (11-11ʺʺ; 12-12ʺʺ) aufweist, wobei zumindest eines der Andrückelemente bewegbar ist.

3. Kabelbearbeitungsvorrichtung (1-1ʺʺ) gemäß Anspruch 2, wobei zumindest eines der Andrückelemente (11-11ʺʺ; 12-12ʺʺ) eine Platte oder eine Walze ist.

4. Kabelbearbeitungsvorrichtung (1-1ʺʺ) gemäß Anspruch 2 oder 3, wobei zumindest eines der Andrückelemente (11-11ʺʺ; 12-12ʺʺ) an einer Wirkseite eine Beschichtung (11a-11aʺʺ; 12a-12aʺʺ), insbesondere eine gummierte Oberfläche, und/oder eine strukturierte Fläche aufweist.

5. Kabelbearbeitungsvorrichtung (1-1ʺʺ) gemäß einem der Ansprüche 2-4, wobei die Andrückelemente (11-11ʺʺ; 12-12ʺʺ) in parallelen Ebenen bewegbar sind, wobei bevorzugt ist, dass die Andrückelemente gegenläufig bewegbar sind.

6. Kabelbearbeitungsvorrichtung (1-1ʺʺ) gemäß einem der Ansprüche 2-5, wobei ein erstes Andrückelement (11-11ʺʺ) derart verstellbar ist, um einen Abstand zu einem zweiten Andrückelement (12-12ʺʺ) einzustellen.

7. Kabelbearbeitungsvorrichtung (1-1ʺʺ) gemäß einem der vorangegangenen Ansprüche, wobei die Kabelaufbereitungseinrichtung (10-10ʺʺ) eine Einrichtung zum Erfassen und Einstellen der Kraft zum Drücken der Isolierung aufweist.

8. Kabelbearbeitungsvorrichtung (1-1ʺʺ) gemäß einem der vorangegangenen Ansprüche, wobei
die Kabelaufbereitungseinrichtung (10) in einer Kabelzuführ-Richtung zur Abisoliervorrichtung (20) betrachtet, neben der Abisoliervorrichtung (20) angeordnet ist,
oder
die Kabelaufbereitungseinrichtung (10', 10"), in einer Kabelzuführ-Richtung zur Abisoliervorrichtung (20', 20") betrachtet, vor oder hinter der Abisoliervorrichtung (20', 20") angeordnet ist,
oder
die Kabelaufbereitungseinrichtung (10‴) in die Abisoliervorrichtung (20 integriert ist.

9. Kabelbearbeitungsvorrichtung (1-1', 1ʺ-1ʺʺ) gemäß einem der vorangegangenen Ansprüche, ferner umfassend einen Kabelgreifer (5-5ʺʺ),
der eingerichtet ist, das Kabel (K-Kʺʺ) von der Kabelaufbereitungseinrichtung (10-10', 10‴) zur Abisoliervorrichtung (20-20ʺʺ) zu führen,
oder der Kabelgreifer (5ʺʺ) die Kabelaufbereitungseinrichtung (10ʺʺ) aufweist.

10. Kabelbearbeitungsvorrichtung (1, 1') gemäß einem der vorangegangenen Ansprüche, ferner umfassend eine Crimpeinrichtung (30, 30') zum Anbringen eines Kontaktelements (C, C') an einem abisolierten Abschnitt des Kabels (K, K').

11. Kabelbearbeitungsvorrichtung (1") gemäß einem der vorangegangenen Ansprüche, ferner umfassend eine Zuführeinrichtung (40") zum Zuführen des Kabels (K"), wobei die Kabelaufbereitungseinrichtung (10") an der Zuführeinrichtung (40") aufgenommen ist.

12. Verfahren zum Verarbeiten eines eine Isolierung aufweisenden Kabels (K-Kʺʺ), umfassend die Schritte:
Drücken der Isolierung in einem abzuisolierenden Bereich des Kabels (K-Kʺʺ), wobei das Drücken kann durch eine alternierende, translatorische Bewegung erfolgt, und
Abisolieren eines Abschnitts der Isolierung vom Kabel (K-Kʺʺ).

13. Verfahren gemäß Anspruch 12, wobei das Drücken des Kabels (K-Kʺʺ) durch eine Bewegung, insbesondere eine Hin- und Herbewegung oder eine Drehbewegung, zumindest eines Andrückelements (11-11ʺʺ; 12-12ʺʺ) erfolgt.

14. Verfahren gemäß Anspruch 12 oder 13, wobei das Kabel (K-Kʺʺ) mittels eines Kabelgreifers (5-5ʺʺ) gehalten wird.

15. Verfahren gemäß einem der Ansprüche 12-14, ferner umfassend den Schritt: Anbringen eines Kontaktelements (C, C') am abisolierten Abschnitt des Kabels (K, K').
